# EUROPEAN PATENT APPLICATION

(11) **EP 3 708 029 A1**
(43) Date of publication of application: **16.09.2020**
(21) Application number: 19184777.1
(22) Date of filing: 05.07.2019
(51) Int. Cl.: A45D 44/00

(54) **VIRTUAL MAKE-UP SYSTEM AND VIRTUAL MAKE-UP COLORING METHOD**

(30) Priority: 13.03.2019 TW 108108512
(71) Applicant: Cal-Comp Big Data, Inc., New Taipei City 22201 (TW)
(72) Inventor: CHEN, Wei-Ting, 22201 NEW TAIPEI CITY (TW)
(74) Representative: Emde, Eric

(57) **Abstract**

A virtual make-up system and a virtual make-up coloring method are provided. The system includes a first electronic device and a second electronic device. The first electronic device obtains a first image by using an image capturing circuit. The first electronic device analyzes the first image to obtain make-up information including a color, and transmits the makeup information to the second electronic device. The second electronic device displays a second image including a character by a display, and obtains a portion to be colored of the character in the second image. The second electronic device colors the color to the portion to be colored of the character according to the make-up information, and displays the colored portion by the display.

## Description

### BACKGROUND

### Technical Field

The invention relates to a virtual make-up system and a virtual make-up coloring method.

### Description of Related Art

Due to numerous make-up related tools and numerous colors of make-up powder, most women need to select an appropriate color from the numerous colors to make up in a limited time before going out. However, the selected color may not always be able to achieve a satisfactory effect. During the make-up process, when a desired color is missing from a color palette, the halfway make-up can't continue. Moreover, when a make-up company launches a new product, it often needs to get an actual trial package before knowing whether it is suitable or not, and the user cannot immediately know a usage effect of the make-up. Moreover, in make-up teaching or in daily make-up trial, when an unsuitable color is put on, a make-up water has to be used to remove the make-up before re-putting on the make-up, which may waste the user's time and effort.

### SUMMARY

The invention is directed to a virtual make-up system and a virtual make-up coloring method, by which a user is able to quickly know an effect of a make-up and whether the make-up is suitable for her without actually putting on the make-up, so that a time required for removing the make-up is avoided, and the efficiency of the user trying the make-up is improved.

The invention provides a virtual make-up system including a first electronic device and a second electronic device. The first electronic device includes an image capturing circuit. The second electronic device includes a display. The first electronic device obtains a first image by using the image capturing circuit. The first electronic device analyzes the first image to obtain make-up information including a color, and transmits the makeup information to the second electronic device. The second electronic device displays a second image including a character by the display, and obtains a portion to be colored of the character in the second image. The second electronic device colors the color to the portion to be colored of the character according to the make-up information, and displays the colored portion by the display.

The invention provides a virtual make-up coloring method adapted to a virtual make-up system, where the virtual make-up system includes a first electronic device and a second electronic device, the first electronic device includes an image capturing circuit, and the second electronic device includes a display, and the method includes: obtaining a first image by the image capturing circuit of the first electronic device; analyzing the first image to obtain make-up information including a color by the first electronic device, and transmitting the make-up information to the second electronic device; displaying a second image including a character by the display of the second electronic device, and obtaining a portion to be colored of the character in the second image; coloring the color to the portion to be colored of the character by the second electronic device according to the make-up information, and displaying the colored portion by the display.

Based on the above description, the virtual make-up system and the virtual make-up coloring method are capable of simulating a user's appearance after using a make-up in a virtual way without actually putting on the make-up, so that the user is able to quickly know the effect of the make-up and whether it is suitable for her. In this way, a time required for removing the make-up is avoided, and the efficiency of the user trying the make-up is improved.

To make the aforementioned more comprehensible, several embodiments accompanied with drawings are described in detail as follows.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a virtual make-up system according to an embodiment of the invention.
FIG. 2 is a schematic diagram of a stylus according to an embodiment of the invention.
FIG. 3 is a flowchart illustrating a virtual make-up coloring method according to an embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

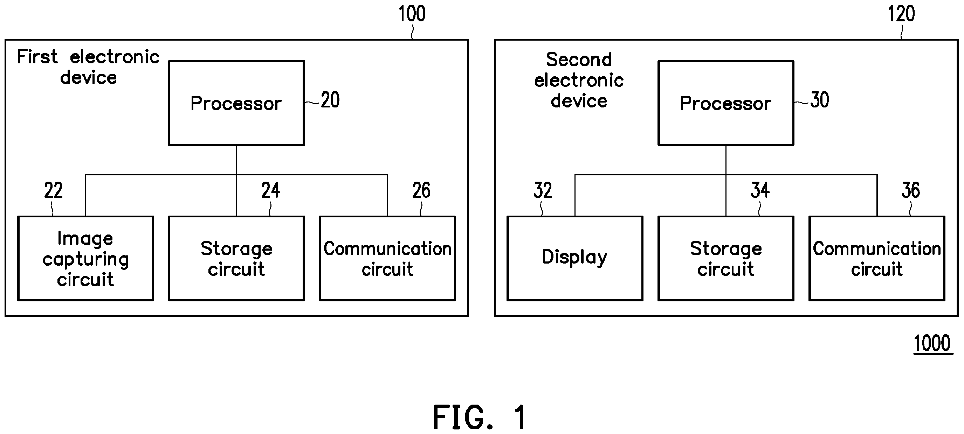

FIG. 1 is a schematic diagram of a virtual make-up system according to an embodiment of the invention.

Referring to FIG. 1, the virtual make-up system 1000 includes a first electronic device 100 and a second electronic device 120. The first electronic device 100 and the second electronic device 120 may communicate with each other in a wired or wireless manner.

The first electronic device 100 includes a process 20, an image capturing circuit 22, a storage circuit 24 and a communication circuit 26, where the image capturing circuit 22, the storage circuit 24 and the communication circuit 26 are respectively coupled to the processor 20.

The processor 20 may be a Central Processing Unit (CPU), or other programmable general purpose or special purpose microprocessor, a Digital Signal Processor (DSP), a programmable controller, an Application Specific Integrated Circuit (ASIC) or other similar device or a combination of the above devices.

The image capturing circuit 22 is, for example, a video camera or a camera adopting a Charge Coupled Device (CCD) lens, a Complementary Metal Oxide Semiconductor Transistor (CMOS) lens, or an infrared lens.

The storage circuit 24 may be any type of a fixed or movable Random Access Memory (RAM), a Read-Only Memory (ROM), a flash memory or a similar device or a combination of the above devices.

The communication circuit 26 may be a device supporting signal transmission of Global System for Mobile communication (GSM), a Personal Handy-phone System (PHS), a Code Division Multiple Access (CDMA) system, a Wideband Code Division Multiple Access (WCDMA) system, a Long Term Evolution (LTE) system, a Worldwide Interoperability for Microwave Access (WiMAX) system, a Wireless Fidelity (Wi-Fi) system or Bluetooth.

In the exemplary embodiment, the storage circuit 24 of the first electronic device 100 stores a plurality of program instructions, and after the above program instructions are loaded, the processor 20 executes the program instructions. For example, the storage circuit 24 includes a plurality of modules, and these modules are used for respectively executing various operations of the first electronic device 100 applied to the virtual make-up system 1000, where each of the modules is composed of one or a plurality of program instructions. However, the invention is not limited thereto, and various operations of the first electronic device 100 may also be implemented in other hardware forms.

The second electronic device 120 includes a processor 30, a display 32, a storage circuit 34 and a communication circuit 36. The display 32, the storage circuit 34 and the communication circuit 36 are respectively coupled to the processor 30.

Since the processor 30, the storage circuit 34 and the communication circuit 36 may be respectively devices similar to the above processor 20, the storage circuit 24 and the communication circuit 26, detailed description thereof is omitted.

The display 32 may be a display device adapted to provide a display function in a display area of the second electronic device 120. The display 32 may be a display device adapted to provide a display function such as a Liquid Crystal Display (LCD), a Light-Emitting Diode (LED), a Field Emission Display (FED), etc.

In the exemplary embodiment, the storage circuit 34 of the second electronic device 120 stores a plurality of program instructions, and after the above program instructions are loaded, the processor 30 executes the program instructions. For example, the storage circuit 34 includes a plurality of modules, and these modules are used for respectively executing various operations of the second electronic device 120 applied to the virtual make-up system 1000, where each of the modules is composed of one or a plurality of program instructions. However, the invention is not limited thereto, and various operations of the second electronic device 120 may also be implemented in other hardware forms.

Particularly, the first electronic device 100 may be an electronic device with an image capturing function such as a mobile phone, a tablet Personal Computer (PC), a notebook computer, or a stylus, etc., which is not limited by the invention. The second electronic device 120 may be an electronic device with a display function such as a mobile phone, a tablet PC, a notebook computer or a screen, etc., which is not limited by the invention. Moreover, in an embodiment, the display of the second electronic device 120 may be a touch display with a touch function. However, in another embodiment, the display of the second electronic device 120 may also be a display without the touch function.

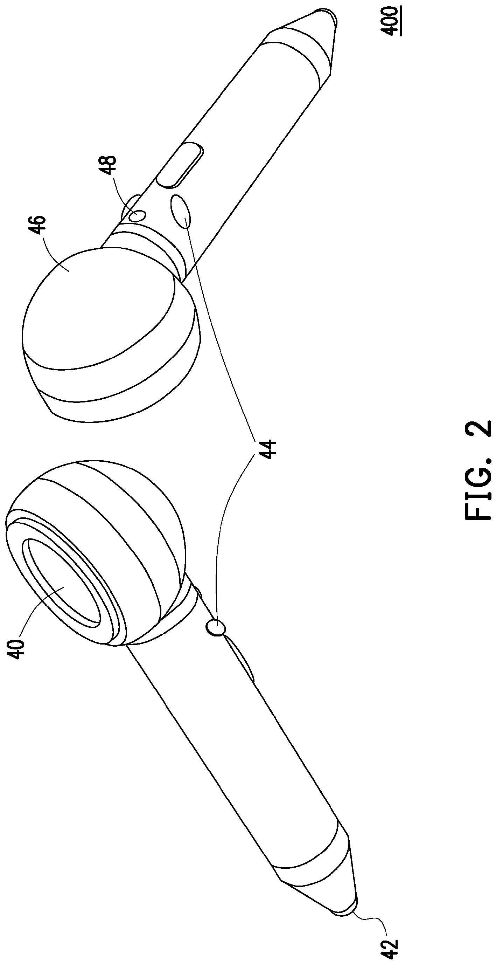

Taking the first electronic device 100 implemented by a stylus with the image capturing function as an example, FIG. 2 is a schematic diagram of a stylus according to an embodiment of the invention.

Referring to FIG. 2, the first electronic device 100 is, for example, implemented by a stylus 400. The stylus 400 may include a lens 40, a pen head 42, a confirm button 44, a power display 46 and a power switch 48. The lens 40 includes the aforementioned image capturing circuit 22, and is used for capturing an image. When the display 32 of the second electronic device 120 is a touch display, the pen head 42 may be used to click on the content displayed by the second electronic device 120 for input. When the display 32 of the second electronic device 120 is a display without the touch function, the first electronic device 100 may, for example, control a cursor displayed by the second electronic device 120 to move the cursor in a wireless manner by using the pen head 42 after the first electronic device 100 is connected to the second electronic device 120 (for example, through Bluetooth). Moreover, when the cursor is moved to an item that may be selected, the user may press the confirm button 44 for selection. The power display 46 is used for displaying a remained power of the stylus 400. The power switch 48 is used for turning on/off the stylus 400.

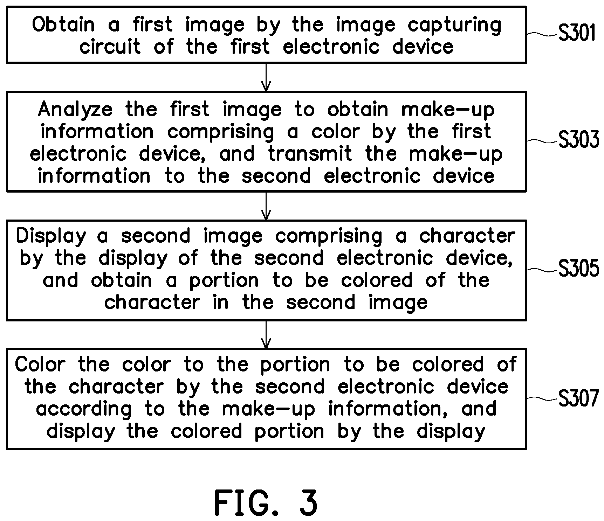

FIG. 3 is a flowchart illustrating a virtual make-up coloring method according to an embodiment of the invention.

Referring to FIG. 3, the image capturing circuit 22 of the first electronic device 100 captures a first image (step S301). In the embodiment, the first electronic device 100 obtains the first image by photographing a barcode, a QR code, a make-up color bar, a paper propaganda or a web propaganda by using the image capturing circuit 22.

After the first image is obtained, the first electronic device 100 analyzes the first image to obtain make-up information including a color, and transmits the make-up information to the second electronic device 120 (step S303). For example, it is assumed that the first image includes the aforementioned barcode or QR code, the first electronic device may obtain a website related to a make-up according to the barcode or QR code in the first image. The first electronic device 100 may connect a webpage of the make-up according to the website and obtain make-up information including the color of the make-up. For another example, it is assumed that the first image includes a make-up color bar of a make-up, the first electronic device 100 may analyze the color of the make-up color bar in the first image to obtain the color of the make-up, and add the color to the make-up information. For still another example, when the paper propaganda or web propaganda includes the aforementioned barcode, QR code or the make-up color bar, the first electronic device 100 may perform analysis by using a method similar as that described above to obtain the makeup information including the color.

It should be noted that after the make-up information is transmitted to the second electronic device 120, the second electronic device 120 may add the make-up information to a virtual make-up box of an application. Thereafter, when the second electronic device 120 is to use the color of the make-up information, the second electronic device 120 may directly select the color of the make-up information from the virtual make-up box.

In the embodiment, the display 32 of the second electronic device 120 may further display a second image including a character. The second electronic device 120 obtains a portion to be colored of the character in the second image (step S305).

For example, in an embodiment, the first electronic device 100 may use the image capturing circuit 22 to photograph the portion to be colored of the aforementioned character to obtain a third image, and transmit the third image to the second electronic device 120. Thereafter, the second electronic device 120 may analyze the third image to find out a corresponding portion in the second image to obtain a portion to be colored of the character in the second image. Particularly, in the operation of photographing the portion to be colored of the aforementioned character to obtain the third image, the image capturing circuit 22 of the first electronic device 100 may be used to photograph the portion to be colored on the body of the aforementioned character herself to obtain the third image. Alternatively, the first electronic device 100 may use the image capturing circuit 22 to photograph the portion to be colored of the character in the second image displayed by the second electronic device 120 to obtain the third image.

It should be noted that the invention may further use other methods to obtain the portion to be colored of the character in the second image. For example, when the display of the second electronic device 120 is a display without the touch function, the first electronic device 100 may, for example, control a cursor displayed by the second electronic device 120 to move the cursor to the portion to be colored of the character in the second image in a wireless manner by using the pen head 42 after the first electronic device 100 is connected to the second electronic device 120 (for example, through Bluetooth), and click the confirm button 44 to select the portion to be colored of the character in the second image. Finally, the second electronic device 120 may color the color to the portion to be colored of the aforementioned character according to the make-up information, and display the colored portion (or a first position) by the display 32 (step S307). Alternatively, when the first electronic device 100 is the aforementioned stylus 400 and the display 32 of the second electronic device 120 is a touch display, the user may use the first electronic device 100 to touch a position (which is also referred to the first position) in the second image displayed by the second electronic device 120, where the first position is, for example, in the character of the image. The second electronic device 120 may color the color to the first position to be colored of the aforementioned character according to the make-up information, and display the colored first position by the display 32.

In summary, the virtual make-up system and the virtual make-up coloring method of the invention are capable of simulating a user's appearance after using a make-up in a virtual way without actually putting on the make-up, so that the user is able to quickly know the effect of the make-up and whether it is suitable for her. In this way, a time required for removing the make-up is avoided, and the efficiency of the user trying the make-up is improved.

## Claims

1. A virtual make-up system (1000), comprising:
a first electronic device (100), comprising an image capturing circuit (22); and
a second electronic device (120), comprising a display (32), wherein
the first electronic device (100) obtains a first image by using the image capturing circuit (22),
the first electronic device (100) analyzes the first image to obtain make-up information including a color, and transmits the makeup information to the second electronic device (120),
the second electronic device (120) displays a second image comprising a character by the display (32), and obtains a portion to be colored of the character in the second image,
the second electronic device (120) colors the color to the portion to be colored of the character according to the make-up information, and displays the colored portion by the display (32).

2. The virtual make-up system (1000) as claimed in claim 1, wherein in the operation of obtaining the first image,
the first electronic device (100) obtains the first image by photographing a barcode, a QR code, a make-up color bar, a paper propaganda or a web propaganda by using the image capturing circuit (22).

3. The virtual make-up system (1000) as claimed in claim 1, wherein after the operation of transmitting the make-up information to the second electronic device (120),
the second electronic device (120) adds the make-up information to a virtual make-up box of an application.

4. The virtual make-up system (1000) as claimed in claim 1, wherein in the operation of obtaining the portion to be colored of the character in the second image,
the first electronic device (100) uses the image capturing circuit (22) to photograph the portion of the character to obtain a third image, and transmits the third image to the second electronic device (120),
the second electronic device (120) obtains the portion to be colored of the character in the second image according to the third image.

5. The virtual make-up system (1000) as claimed in claim 4, wherein in the operation of photographing the portion of the character to obtain the third image,
the first electronic device (100) uses the image capturing circuit (22) to photograph the portion of the character herself to obtain the third image.

6. The virtual make-up system (1000) as claimed in claim 4, wherein in the operation of photographing the portion of the character to obtain the third image,
the first electronic device (100) uses the image capturing circuit (22) to photograph the portion of the character in the second image displayed by the second electronic device (120) to obtain the third image.

7. The virtual make-up system (1000) as claimed in claim 1, wherein before the operation of obtaining the portion to be colored of the character in the second image,
the first electronic device (100) selects the portion to be colored of the character in the second image.

8. The virtual make-up system (1000) as claimed in claim 1, wherein the first electronic device (100) is a stylus (400), the display (32) of the second electronic device (120) is a touch display, wherein
the first electronic device (100) touches a first position in the second image displayed by the second electronic device (120), wherein the first position is in the character,
the second electronic device (120) colors the color to the first position of the character, and displays the colored first position by the display (32).

9. A virtual make-up coloring method, adapted to a virtual make-up system (1000), wherein the virtual make-up system (1000) comprises a first electronic device (100) and a second electronic device (120), the first electronic device (100) comprises an image capturing circuit (22), and the second electronic device (120) comprises a display (32), the virtual make-up coloring method comprising:
obtaining a first image by the image capturing circuit (22) of the first electronic device (100);
analyzing the first image to obtain make-up information comprising a color by the first electronic device (100), and transmitting the make-up information to the second electronic device (120);
displaying a second image comprising a character by the display (32) of the second electronic device (120), and obtaining a portion to be colored of the character in the second image; and
coloring the color to the portion to be colored of the character by the second electronic device (120) according to the make-up information, and displaying the colored portion by the display (32).

10. The virtual make-up coloring method as claimed in claim 9, wherein the step of obtaining the first image comprises:
photographing a barcode, a QR code, a make-up color bar, a paper propaganda or a web propaganda by using the image capturing circuit (22) of the first electronic device (100) to obtain the first image.

11. The virtual make-up coloring method as claimed in claim 9, wherein after the step of transmitting the make-up information to the second electronic device (120), the method further comprises
adding the make-up information to a virtual make-up box of an application by the second electronic device (120).

12. The virtual make-up coloring method as claimed in claim 9, wherein the step of obtaining the portion to be colored of the character in the second image comprises:
photographing the portion of the character to obtain a third image by the image capturing circuit (22) of the first electronic device (100), and transmitting the third image to the second electronic device (120),
obtaining the portion to be colored of the character in the second image by the second electronic device (120) according to the third image.

13. The virtual make-up coloring method as claimed in claim 12, wherein the step of photographing the portion of the character to obtain the third image comprises:
photographing the portion of the character in the second image displayed by the second electronic device (120) to obtain the third image by the image capturing circuit (22) of the first electronic device (100).

14. The virtual make-up coloring method as claimed in claim 9, wherein before the step of obtaining the portion to be colored of the character in the second image, the method further comprises:
selecting the portion to be colored of the character in the second image by the first electronic device (100).

15. The virtual make-up coloring method as claimed in claim 9, wherein the first electronic device (100) is a stylus (400), the display (32) of the second electronic device (120) is a touch display, and the method further comprises:
touching a first position in the second image displayed by the second electronic device (120) by the first electronic device (100), wherein the first position is in the character; and
coloring the color to the first position of the character by the second electronic device (120), and displaying the colored first position by the display (32).
